# EUROPÄISCHE PATENTSCHRIFT

(11) **EP 0 702 515 B1**
(45) Veröffentlichungstag und Bekanntmachung des Hinweises auf die Patenterteilung: **27.12.1996**
(21) Anmeldenummer: 94920906.8
(22) Anmeldetag: 06.06.1994
(51) Int. Cl.: A01N 1/02

(54) **VERFAHREN UND VORRICHTUNG ZUR KONSERVIERUNG VON ORGANEN, EXTREMITÄTEN UND GEWEBELAPPEN**
METHOD AND DEVICE FOR CONSERVING ORGANS, BODY EXTREMITIES AND PIECES OF BODY TISSUE
PROCEDE ET DISPOSITIF POUR LA CONSERVATION D'ORGANES, DE MEMBRES ET DE LAMBEAUX DE TISSUS

(30) Priorität: 07.06.1993 DE 4319368; 09.11.1993 DE 4339024; 04.03.1994 DE 4407863
(43) Veröffentlichungstag der Anmeldung: 27.03.1996
(73) Patentinhaber: MAYER, Berndt, D-10585 Berlin (DE)
(72) Erfinder: MAYER, Berndt, D-10585 Berlin (DE)
(74) Vertreter: Hengelhaupt, Jürgen, Dipl.-Ing.
(86) Internationale Anmeldenummer: EP9401839
(87) Internationale Veröffentlichungsnummer: WO9428710

(56) Entgegenhaltungen:
- EP-A- 0 376 763
- DE-A- 3 712 200
- US-A- 4 446 229
- US-A- 5 145 771

## Beschreibung

Die vorliegende Erfindung betrifft ein Verfahren und eine Vorrichtung zur Konservierung von Organen, Extremitäten bzw. Gewebelappen und ist anwendbar insbesondere zur Vitalerhaltung von Organen, Extremitäten und Gewebelappen bei Raum- bzw. Körpertemperatur. Hauptanwendungsgebiete der Erfindung sind die operative Transplantation, der Betrieb von Organ- bzw. Gewebebanken und die Forschung.

In der klinischen Praxis ist es bekannt, freie Gewebelappen und isolierte Organe, die zur Transplantation am Menschen entnommen wurden, "kalt" bei 1 - 6 °C in kardioplegischen Lösungen zu lagern, um den Sauerstoffverbrauch und deshalb den Stoffwechsel auf ein Minimum zu reduzieren. Freie Muskel-Haut-Knochen-Lappen sollen dabei nicht länger als 24 Stunden gelagert werden, bevor sie wieder an einen Blutkreislauf angeschlossen werden. Im Tierexperiment wurden bisher für Gewebelappen maximale Konservierungszeiten von 45 Stunden erzielt.

Nachteilig an diesen bekannten Lösungen ist der Aufwand für die erforderliche Kühlung sowie die relativ kurze maximale Konservierungszeit.
Bekannt ist weiterhin bei der Organkonservierung mittels hypothermer Perfusion die Verwendung spezifischer Konservierungslösungen, wie sie in W. Konertz, Konservierung des Herzens zu Transplantationszwecken mit Euro-Collins-Lösungen, Habilitationsschrift, Kiel, 1987, beschrieben wird. Ebenfalls bekannt sind Dialyseverfahren, wie sie im Zusammenhang mit der Anwendung der künstlichen Niere bekannt wurden.
Eine Langzeitkonservierung von Organen, Extremitäten bzw. Gewebelappen ist bei Raumtemperatur mit den bekannten Lösungen nicht möglich.

Der Erfindung liegt daher die Aufgabe zugrunde, ein Verfahren und eine Vorrichtung zu schaffen, welche eine effektive und wirtschaftliche Langzeitkonservierung von Organen, Extremitäten und Gewebelappen bei Raumtemperatur bzw. Körpertemperatur ermöglichen.
Es ist weiterhin Aufgabe der Erfindung, die Voraussetzungen für eine effiziente Forschung zu verbessern und die Anzahl notwendiger Tierversuche zu minimieren.

Diese Aufgabe wird erfindungsgemäß gelöst durch die Merkmale im kennzeichnenden Teil der Ansprüche 1 und 7 in Verbindung mit den Merkmalen der jeweiligen Oberbegriffe. Zweckmäßige Ausgestaltungen der Erfindung sind in den Unteransprüchen enthalten.

Der besondere Vorteil der Erfindung besteht darin, daß eine Langzeitkonservierung von Organen, Extremitäten oder Gewebelappen in der Größenordnung von 8 Tagen und mehr bei Raum- bzw. Körpertemperatur ermöglicht wird. Der Stoffwechsel läuft bei diesen Temperaturen weiter und erhält die Aktivität der Fibroplasten zur Wundheilung und Einheilung. So können beispielsweise freie Gewebelappen über ein extrakorporales Kreislaufsystem zur Einheilung gebracht werden ohne mikrochirurgischen Gefäßanschluß.

Dabei erfolgt die Sauerstoffversorgung und Entgiftung über drei getrennte Kreislaufsysteme, wobei der erste Kreislauf die Organe, Extremitäten bzw. Gewebelappen mit einem sauerstoffreichen, arteriellen Perfusat versorgt und das venöse Perfusat oxygeniert, entgiftet und Stoffwechselmetaboliten austauscht, wobei die physiologische, wäßrige Lösung des zweiten Kreislaufs in einem Dilutionstopf oxygeniert wird und den Sauerstoff an der Dialysemembran oder vor der Dialysemembran in der Flüssigkeitsphase an den ersten Kreislauf abgibt, und der dritte Kreislauf eine diskontinuierliche Spülreinigung der Organe bzw. Gewebelappen mit einer physiologischen wäßrigen Lösung realisiert, wobei die drei Kreisläufe derart gesteuert werden, daß entweder nur die Kreisläufe 1 und 2 gemeinsam in Betrieb sind oder der Kreislauf 3 in Betrieb ist.

Als Perfusat können wäßrige Nährstofflösungen oder Blut oder Blutprodukte angewendet werden.

Ein weiterer Vorteil der Erfindung besteht darin, daß Tierversuche eingespart werden können, weil an isolierten Organen und Gewebeblöcken Untersuchungen durchgeführt werden können, die sonst einen Tierversuch zur Folge hätten. Ebenso ist es möglich, daß mehrere Arbeitsgruppen mit den gleichen Organen eines Tieres arbeiten. Der Forschung steht ein standardisiertes Modell für Untersuchungen an isolierten Organen und freien Lappen zur Verfügung. Banken für isolierte Organe und freie Gewebeblöcke können aufgebaut werden. Organe und Gewebelappen können ohne wesentliche Hypoxiephase gelagert und vor einer Transplantation konditioniert werden.

Eine effektive und wirtschaftliche Durchführung des Verfahrens wird durch eine Vorrichtung erreicht, bei welcher eine Organkammer mindestens einen arteriellen Zulauf, welcher mit dem Ausgang einer ersten Pumpe verbunden ist und mindestens einen venösen Ablauf, welcher mit dem Eingang einer zweiten Pumpe verbunden ist, sowie mindestens einen Spülmitteleingang und mindestens einen Spülmittelausgang sowie mindestens einen Steuereingang aufweist. Der Ausgang der zweiten Pumpe ist über einen Hämofilter mit dem Eingang der ersten Pumpe verbunden.

Um das Gewebe wirksam vor mikrobieller Besiedelung abzuschirmen, ist die Organkammer luftdicht ausgebildet und alle Schläuche sind entweder aus Einwegmaterial ausgeführt oder sie bestehen aus sterilisierbarem Material. Die Organkammer ist zusätzlich aus zumindest teilweise durchsichtigem Material gefertigt. Der dritte Kreislauf schaltet sich automatisch über eine Zeituhr gesteuert zur Spülreinigung des Gewebes ein. Während der Spülung sind der erste und der zweite Kreislauf ausgeschaltet, um die Flüssigkeit nicht zu vermischen.

Die Erfindung soll nachstehend anhand von in den Figuren dargestellten Ausführungsbeispielen näher erläutert werden.

Es zeigen:
- Fig. 1:: ein Flußbild einer Konservierungsvorrichtung mit Organkammer und Kreislaufsystemen;

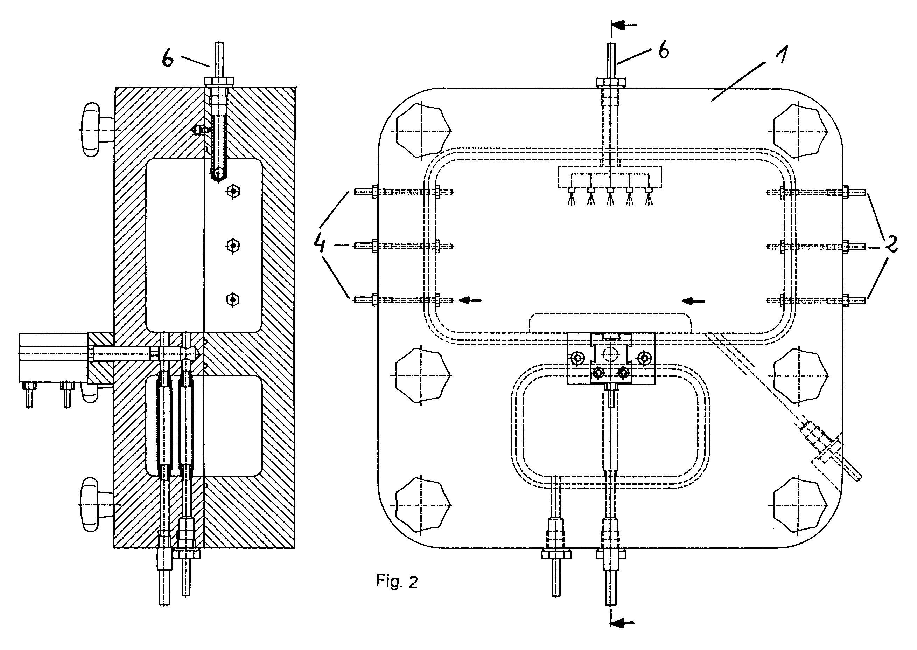

- Fig. 2:: die Organkammer in zwei unterschiedlichen Ansichten;

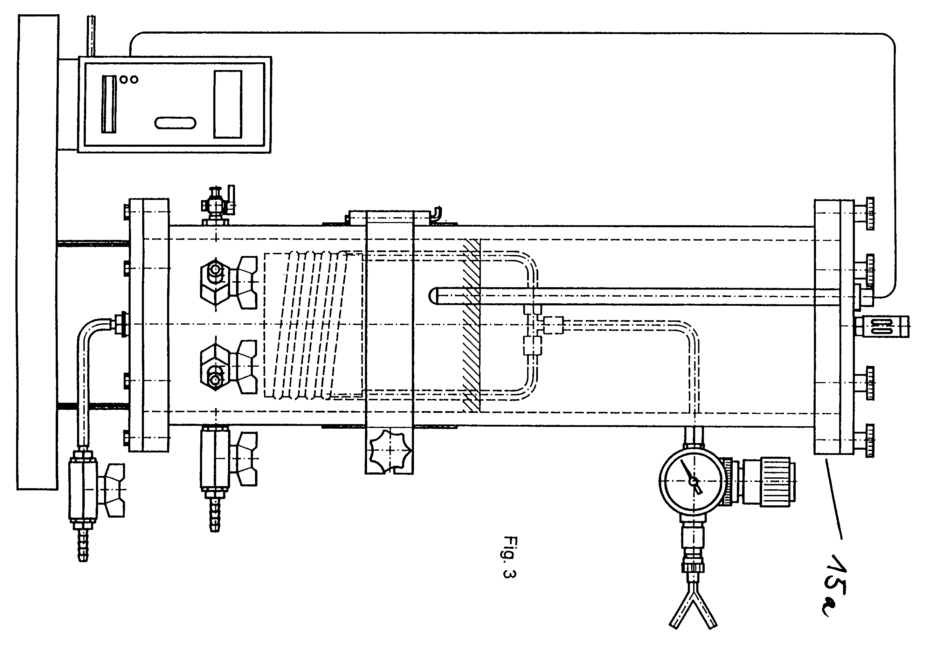

- Fig. 3:: den Dilutionstopf aus dem Dilutionskreislauf

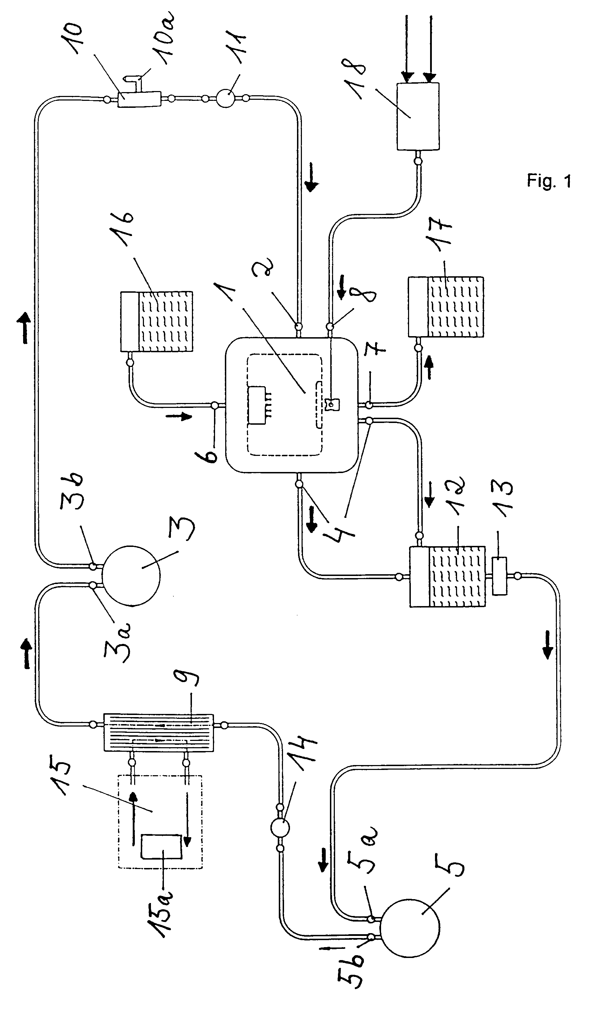

Gemäß Fig. 1 werden zur Konservierung der in der Organkammer (1) befindlichen Organe, Extremitäten oder Gewebelappen drei getrennte Kreisläufe realisiert, wobei die Bewegung der Flüssigkeiten durch Pumpen, vorzugsweise Peristaltikpumpen, erfolgt.
Hierzu sind die venösen Abläufe (4) der Organkammer (1) über Schläuche mit einem Reservoir (12) für Nährlösung verbunden. Das Reservoir (12) ist mit einer Waage (13) gekoppelt. Von der Waage (13) verläuft ein Schlauch zum Eingang (5a) der Pumpe (5), deren Ausgang (5b) über ein Druckmeßgerät (14) mit dem Hämofilter (9) verbunden ist. Der Hämofilter (9) ist weiterhin mit dem Eingang (3a) einer Pumpe (3) verbunden, deren Ausgang (3b) über eine Luftfalle (10) mit Entlüftung (10a) und ein weiteres Druckmeßgerät (11) mit dem arteriellen Zulauf (2) der Organkammer (1) verbunden ist.

Am Hämofilter (9) angeschlossen ist ein Dilutionskreislauf (15) mit Dilutionstopf (15a). Die Organkammer (1) weist weiterhin zur Realisierung des dritten Kreislaufes einen Spülmitteleingang (6) und einen Spülmittelausgang (7) auf, wobei der Spülmitteleingang (6) mit einem antibiotischen Spülreservoir 16 und der Spülmittelausgang 7 mit einem Gefäß 17 für verworfene Spülflüssigkeit verbunden ist. Die Steuerung der Kreisläufe erfolgt über eine am Steuereingang (8) angeschlossene elektrische Steuerschaltung (18).

Nachfolgend soll die Funktion des extrakorporalen Kreislaufsystems näher erläutert werden.

Der erste Kreislauf versorgt über die Pumpe (3) das Organ, die Extremität oder den Gewebelappen mit sauerstoffreichem Perfusat. Der zweite Kreislauf bewegt die als Dialysat bezeichnete Flüssigkeit in physiologischer Konzentration, die in einem Dilutionsreservoir mit Sauerstoff hyper- oder normobar oxygeniert wird und dann an einer Dialysemembran die Organperfusionsflüssigkeit oxygeniert, Stoffwechselmetaboliten austauscht und entgiftet.

Das Verfahren ist nach dem Dialyse- oder Hämofiltrationsprinzip möglich. Wegen der Konzentrationspolarisierung der Proteine sind beim Hämofiltrationsverfahren keine so hohen Flüsse möglich wie beim Dialyseverfahren.

Als Perfusat kommen Blut, Blutprodukte oder wäßrige Nährstofflösungen in Frage. Bei Haut- Muskel- Knochen- Lappen ist die Sauerstoffzufuhr in wäßriger Form möglich, wenn die Flußrate entsprechend hoch ist.

Der dritte Kreislauf sorgt für die regelmäßige Spülreinigung des Gewebes. Er wird mit Intervallen über eine in den Figuren nicht dargestellte Zeitschaltuhr geschaltet, so daß die Flüssigkeiten sich nicht vermischen können. Solange der Spülvorgang läuft, sind die Kreisläufe 1 und 2 gestoppt.

Diese Spülreinigung und die Gewebeaufbewahrung in einer Organkammer (1), welche als sterilisierbares und luftdichtes Klarsichtgefäß ausgebildet ist, sind notwendig, um eine mikrobielle Besiedelung des Gewebes zu verhindern. Aus diesem Grund sind alle Flüssigkeitsschläuche aus Einwegware gefertigt, und die Flüssigkeiten der Kreisläufe 1 und 2 müssen aus hygienischen Gründen und zur Substraterneuerung täglich ausgetauscht werden.

Die erfolgreiche Funktion der Erfindung wurde bisher tierexperimentell nachgewiesen. Als Modell eines Gewebelappens diente dabei ein muskulokutaner Trapeziuslappen des Schweines.

## Patentansprüche

1. Verfahren zur Konservierung von Organen, Extremitäten und Gewebelappen unter Ausnutzung eines extrakorporalen Kreislaufsystems mit mehreren Kreisläufen,
dadurch gekennzeichnet, daß
die Konservierung bei Raumtemperatur bzw. Körpertemperatur erfolgt und drei getrennte Kreislaufsysteme die Langzeitkonservierung realisieren, wobei
- der erste Kreislauf die Organe, Extremitäten bzw. Gewebelappen mit einem sauerstoffreichen, arteriellen Perfusat versorgt und das venöse Perfusat oxygeniert, entgiftet und den Stoffwechselmetabolitaustausch vornimmt, wobei
- die physiologische, wäßrige Lösung des zweiten Kreislaufes in einem Dilutionstopf oxygeniert wird und diese den Sauerstoff an der Dialysemembran oder vor der Dialysemembran in der Flüssigkeitsphase an den ersten Kreislauf abgibt, und
- der dritte Kreislauf eine diskontinuierliche Spülreinigung der Organe, Extremitäten bzw. Gewebelappen mit einer physiologischen, wäßrigen Lösung realisiert, wobei die drei Kreisläufe derart gesteuert werden, daß entweder nur die Kreisläufe 1 und 2 in Betrieb sind oder der Kreislauf 3 in Betrieb ist.

2. Verfahren nach Anspruch 1,
dadurch gekennzeichnet, daß
der in dem arteriellen Perfusat des ersten Kreislaufes enthaltenen Sauerstoff über eine Dialysemembran aus dem zweiten Kreislauf geliefert wird.

3. Verfahren nach Anspruch 1 oder 2,
dadurch gekennzeichnet, daß
das Perfusat des ersten Kreislaufes aus einer wäßrigen Nährstofflösung oder aus Blut oder aus Blutprodukten besteht.

4. Verfahren nach Anspruch 1 oder 2,
dadurch gekennzeichnet, daß
zusätzlich zu der Oxygenierung an der Dialysemembran die Entgiftung und der Stoffwechselmetabolitaustausch erfolgt.

5. Verfahren nach Anspruch 2 oder 4,
dadurch gekennzeichnet, daß
die Oxygenierung normobar oder hyperbar erfolgt.

6. Verfahren nach Anspruch 1,
dadurch gekennzeichnet, daß
die Bewegung der Kreisläufe durch Pumpen erfolgt.

7. Vorrichtung zur Konservierung von Organen, Extremitäten und Gewebelappen mit mehreren Kreisläufen,
dadurch gekennzeichnet, daß
eine Organkammer (1) mindestens einen arteriellen Zulauf (2), welcher mit dem Ausgang (3b) einer ersten Pumpe (3) verbunden ist und mindestens einen venösen Ablauf (4), welcher mit dem Eingang (5a) einer zweiten Pumpe (5) verbunden ist sowie mindestens einen Spülmitteleingang (6) und mindestens einen Spülmittelausgang (7) sowie mindestens einen Steuereingang (8) aufweist und der Ausgang (5b) der Pumpe (5) über einen Hämofilter (9) mit dem Eingang (3a) der Pumpe (3) verbunden ist.

8. Vorrichtung nach Anspruch 7,
dadurch gekennzeichnet, daß
die einzelnen Elemente der Kreislaufsysteme durch Schläuche miteinander verbunden sind und die Schläuche Einwegmaterialien sind oder aus sterilisierbarem Material bestehen.

9. Vorrichtung nach Anspruch 7,
dadurch gekennzeichnet, daß
zwischen dem arteriellen Zulauf (2) der Organkammer (1) und dem Ausgang (3b) der Pumpe (3) eine Luftfalle (10) mit Entlüftung (10a) sowie ein Druckmeßgerät (11) zur Messung des Organdrucks angeordnet ist.

10. Vorrichtung nach Anspruch 7,
dadurch gekennzeichnet, daß
zwischen dem venösen Ablauf (4), der Organkammer (1) und dem Eingang (5a) der Pumpe (5) ein Reservoir (12) für Nährlösung und eine Waage (13) angeordnet ist.

11. Vorrichtung nach Anspruch 7,
dadurch gekennzeichnet, daß
zwischen dem Ausgang (5b) der Pumpe (5) und dem Eingang des Hämofilters (9) ein Druckmeßgerät (14) angeordnet ist.

12. Vorrichtung nach Anspruch 7,
dadurch gekennzeichnet, daß
an dem Hämofilter (9) ein Dilutionskreislauf (15) angeschlossen ist.

13. Vorrichtung nach Anspruch 7,
dadurch gekennzeichnet, daß
der Spülmitteleingang (6) mit einem Spulmittelreservoir (16) verbunden ist.

14. Vorrichtung nach Anspruch 7,
dadurch gekennzeichnet, daß
der Spülmittelausgang (7) mit einem Gefäß (17) für verworfene Spülflüssigkeit verbunden ist.

15. Vorrichtung nach Anspruch 7,
dadurch gekennzeichnet, daß
der Steuereingang (8) über eine Druckleitung mit einer elektrischen Steuerschaltung (18) verbunden ist.

16. Vorrichtung nach Anspruch 7,
dadurch gekennzeichnet, daß
die Organkammer (1) ein luftdicht ausgebildetes Klarsichtgefäß ist.

17. Vorrichtung nach Anspruch 7,
dadurch gekennzeichnet, daß
die Pumpen (3, 5) Peristaltikpumpen sind oder Rollerpumpen oder kleine Pumpen, wie sie beim künstlichen Herzen Verwendung finden, sind.

## Claims

1. Method of conserving organs, body extremities and lobes of body tissue by utilising an extracorporal circulation system having several circulations,
characterised in that
conservation is effected at room temperature resp body temperature and that three discrete circulation systems realise long-term conservation,
- the first circulation system supplying the organs, body extremities resp lobes of body tissue with an oxygen-rich arterial perfusate and exygenising as well as detoxicating the venous perfusate and bringing about metabolite exchange,
- the physiological aqueous solution of the second circulation system being oxygenised in a dilution pot and said solution delivering the oxygen on the dialysis membrane or before the latter to the first circulation system in the liquid phase and
- the third circulation system realising a discontinuous cleaning-by-flushing of the organs, body extremities resp lobes of body tissue with a physiological aqueous solution and the three circulation systems being controlled such that either only circulation systems 1 and 2 or circulation system 3 will be in operation.

2. Method as set forth in Claim 1,
characterised in that
the oxygen contained in the arterial perfusate of the first circulation system is furnished from the second circulation system through a dialysis membrane.

3. Method as set forth in Claim 1 or 2,
characterised in that
the perfusate of the first circulation system consists of an aqueous nutritive solution or of blood or of blood products.

4. Method as set forth in Claim 1 or 2,
characterised in that,
in addition to oxygenising on the dialysis membrane, detoxication and metabolite exchange are effected.

5. Method as set forth in Claim 2 or 4,
characterised in that
oxygenising is effected in normobaric or hyperbaric a manner.

6. Method as set forth in Claim 1,
characterised in that
the movement of the circulation systems is brought about by pumps.

7. Device for conserving organs, body extremities and lobes of body tissue, said device having several circulations,
characterised in that
an organ chamber (1) has at least one arterial inlet (2), which is connected with the delivery section (3b) of a first pump (3), and at least one venous outlet (4), which is connected with the intake section (5a) of a second pump (5), as well as at least one entrance (6) for the flushing agent and at least one exit (7) for the flushing agent as well as at least one control entrance (8) and that the delivery section (5b) of the pump (5) is connected with the intake section (3a) of the pump (3) through a haemofilter (9).

8. Device as defined in Claim 7,
characterised in that
the individual elements of the circulation systems are interconnected by hoses and that the hoses are of expendable materials or consist of sterilisable material.

9. Device as defined in Claim 7,
characterised in that,
between the arterial inlet (2) of the organ chamber (1) and the delivery section (3b) of the pump (3), there are disposed an air trap (10) with a vent (10a) as well as a pressure meter (11) for measuring organ pressure.

10. Device as defined in Claim 7,
characterised in that,
between the venous outlet (4), the organ chamber (1) and the intake section (5a) of the pump (5), there are disposed a reservoir (12) for nutrient solution and a pair of scales (13).

11. Device as defined in Claim 7,
characterised in that,
between the delivery section (5b) of the pump (5) and the entrance of the haemofilter (9), there is disposed a pressure meter (14).

12. Device as defined in Claim 7,
characterised in that
a dilution circulation system (15) is joined to the haemofilter (9).

13. Device as defined in Claim 7,
characterised in that
the entrance (6) for the flushing agent is connected with a flushing agent reservoir (16).

14. Device as defined in Claim 7,
characterised in that
the exit (7) for the flushing agent is connected with a vessel (17) for rejected flushing liquid.

15. Device as defined in Claim 7,
characterised in that
the control entrance (8) is connected with an electric control circuit (18) through a pressure line.

16. Device as defined in Claim 7,
characterised in that
the organ chamber (1) is a transparent vessel manufactured so as to be air-tight.

17. Device as defined in Claim 7,
characterised in that
the pumps (3, 5) are peristaltic pumps or roller pumps or small pumps, such as are employed with a man-made heart.

## Revendications

1. Procédé pour la conservation des organes, des extrémités et des lobes de tissu en utilisant un système de circulation extracorporel ayant plusieurs circulations,
caractérisé en ce que
la conservation est effectuée à température ambiante respectivement à température du corps humain et trois systèmes de circulation discrets réalisent la conservation de longue durée,
- la première circulation alimentant les organes, les extrémités respectivement les lobes de tissu en l'un produit de perfusion artériel riche en oxygène, et oxygénant ainsi que détoxiquant le produit de perfusion veineux et accomplissant l'échange de métabolite du métabolisme,
- la solution aqueuse physiologique de la deuxième circulation étant oxygénée dans un pot de dilution et ladite solution, pendant la phase liquide, délivrant l'oxygène sur la membrane de dialyse ou devant la membrane de dialyse à la première circulation, et
- la troisième circulation réalisant un nettoyage-par-rinçage discontinu desdits organes, desdites extrémités respectivement desdits lobes de tissu avec une solution aqueuse physiologique, à l'occasion de quoi les trois circulations sont commandées de telle manière que soit seulement les circulations 1 et 2 sont en action soit la circulation 3 est en action.

2. Procédé selon Revendication 1,
caractérisé en ce que
l'oxygéne contenu dans le produit de perfusion artériel de la première circulation est fourni, à travers une membrane de dialyse, de la deuxième circulation.

3. Procédé selon Revendication 1 ou 2,
caractérisé en ce que
le produit de perfusion de la première circulation consiste en une solution nutritive aqueuse ou en sang ou en produits de sang.

4. Procédé selon Revendication 1 ou 2,
caractérisé en ce qu',
abstraction faite de l'oxygénation sur la membrane de dialyse, la détoxication et l'échange de métabolite du métabolisme ont lieu additionnellement.

5. Procédé selon Revendication 2 ou 4,
caractérisé en ce que
l'oxygénation est effectuée de manière normobarique ou hyperbarique.

6. Procédé selon Revendication 1,
caractérisé en ce que
le mouvement des circulations est effectué par des pompes.

7. Dispositif pour la conservation des organes, des extrémités et des lobes de tissu, ledit dispositif ayant plusieurs circulations,
caractérisé en ce qu'
une chambre (1) d'organes présente au moins une conduite (2) d'amenée artérielle communiquant avec la sortie (3b) d'une première pompe (3) et au moins un conduit (4) de décharge veineux communiquant avec l'entrée (5a) d'une deuxième pompe (5) ainsi qu'au moins une entrée (6) pour l'agent de rinçage et au moins une sortie (7) pour l'agent de rinçage ainsi qu'au moins une entrée (8) de commande et que la sortie (5b) de la pompe (5) communique avec l'entrée (3a) de la pompe (3) par un hémofiltre (9).

8. Dispositif selon Revendication 7,
caractérisé en ce que
les éléments individuels des systèmes de circulation sont reliés l'un à l'autre par des tuyaux et que les tuyaux sont en matières perdues ou en matière capable d'être stérilisée.

9. Dispositif selon Revendication 7,
caractérisé en ce qu',
entre la conduite (2) d'amenée artérielle de la chambre (1) d'organes et la sortie (3b) de la pompe (3), une trappe (10) d'air y compris un évent (10a) ainsi qu'un manomètre (11) pour mesurer la pression d'organes sont arrangés.

10. Dispositif selon Revendication 7,
caractérisé en ce qu',
entre le conduit (4) de décharge de la chambre (1) d'organes et l'entrée (5a) de la pompe (5), un réservoir (12) pour solution nutritive et une balance (13) sont arrangés.

11. Dispositif selon Revendication 7,
caractérisé en ce qu',
entre la sortie (5b) de la pompe (5) et l'entrée de l'hémofiltre (9), un manomètre (14) est arrangé.

12. Dispositif selon Revendication 7,
caractérisé en ce qu'
une circulation (15) de dilution est raccordée à l'hémofiltre (9).

13. Dispositif selon Revendication 7,
caractérisé en ce que
l'entrée (6) pour l'agent de rinçage communique àvec un réservoir (16) d'agent de rinçage.

14. Dispositif selon Revendication 7,
caractérisé en ce que
la sortie (7) pour l'agent de rinçage communique avec un récipient (17) pour liquide de rinçage écarté.

15. Dispositif selon Revendication 7,
caractérisé en ce que
l'entrée (8) de commande est reliée à l'un circuit (18) de commande électrique par l'intermédiaire d'une conduite forcée.

16. Dispositif selon Revendication 7,
caractérisé en ce que
la chambre (1) d'organes est construite comme récipient transparent et étanche à l'air.

17. Dispositif selon Revendication 7,
caractérisé en ce que
les pompes (3, 5) sont des pompes péristaltiques ou des pompes à rouleaux ou de petites pompes comme elles sont utilisées en cas d'un coeur artificiel.
